## Europäisches Patentamt
## European Patent Office
## Office européen des brevets

(19)

(11) Veröffentlichungsnummer: **0 205 465**
**B1**

(12)

# EUROPÄISCHE PATENTSCHRIFT

(45) Veröffentlichungstag der Patentschrift:
23.08.89

(51) Int. Cl.⁴: **C 02 F 3/28, C 02 F 1/34**

(21) Anmeldenummer: **85905603.8**

(22) Anmeldetag: **22.11.85**

(86) Internationale Anmeldenummer:
**PCT/CH 85/00165**

(87) Internationale Veröffentlichungsnummer:
**WO 86/03481 (19.06.86 Gazette 86/13)**

(54) **DYNAMISCHER ANAEROBFILTER.**

(30) Priorität: **07.12.84 CH 5828/84**

(73) Patentinhaber: **Biowatt AG, Grossmünsterplatz 1, CH- 8001 Zürich (CH)**

(43) Veröffentlichungstag der Anmeldung:
**30.12.86 Patentblatt 86/52**

(72) Erfinder: **EDELMANN, Werner, Unterdorf 143, CH-8933 Maschwanden (CH)**

(45) Bekanntmachung des Hinweises auf die Patenterteilung:
**23.06.89 Patentblatt 89/34**

(74) Vertreter: **Feldmann, Clarence Paul, c/o Patentanwaltsbüro FELDMANN AG Postfach Kanalstrasse 17, CH- 8152 Glattbrugg (CH)**

(84) Benannte Vertragsstaaten:
**AT BE CH DE FR GB IT LI LU NL SE**

(56) Entgegenhaltungen:
**BE-A-788 397**
**CH-A-476 645**
**DE-A-1 442 427**
**DE-A-2 439 991**
**DE-A-3 208 977**
**FR-A-2 528 030**
**NL-A-8 202 983**

**Die Akte enthält technische Angaben, die nach dem Eingang der Anmeldung eingereicht wurden und die nicht in dieser Patentschrift enthalten sind.**

EP 0 205 465 B1

## Beschreibung

Die vorliegende Erfindung betrifft ein Verfahren zur Reduktion der anaeroben Abbauzeit in einem dynamischen Anaerobfilter, sowie einen Anaerobfilter zur Durchführung des Verfahrens.

Die anaerobe Gärung ist ein biologischer, biochemischer Prozess, an dem anaerobe Mikroorganismen aktiv beteiligt sind. Der anaerobe, mikrobielle Abbau von flüssigen, organischen Substraten erfolgt im sogenannten Anaerobfilter oder Fermenter. Ein wesentliches Problem bei diesem Prozess ist dabei die Abbauzeit. Zur Verkürzung der Abbauzeit werden heute vermehrt dynamische Anaerobfilter eingesetzt.

Aus der europäischen Offenlegungsschrift 0 061 813 ist ein dynamischer Anaerobfilter bekannt, bei dem das Filtermaterial, auf dem die Bakterienbiomasse sich festgesetzt hat, im Fermenterbehälter rotiert wird. Die Erhöhung der bei statischen Anaerobfiltern sehr geringen Durchströmungsgeschwindigkeit des beispielsweise bei der Abwasserreinigung anfallenden Substrates, führt zu einem intensiveren Kontakt zwischen Substrat und den auf dem Trägermaterial wachsenden Bakterien.

Die Verweilzeit des Substrates (Schlamm) im Fermenter ist lediglich abhängig von der Abbauzeit und die Abbauzeit ist unter anderem gegeben durch die Menge der aktiven Biomasse, welche beeinflusst wird durch die Intensität des Stoffaustausches zwischen Bakterien und Substrat. Der Stoffaustausch wird beeinflusst durch Temperatur, Konzentration der abbaubaren Anteile und Intensität des Kontaktes.

Wie oben beschrieben, wird die Strömungsgeschwindigkeit durch die Relativbewegung zwischen Trägermaterial mit Bakterien und dem abzubauenden Substrat bei dynamischen Anaerobfiltern durch Rotation des Trägermaterials im Fermenter erhöht, wobei die Relativgeschwindigkeit zwischen Substrat und Bakterien je nach Abstand des Trägermaterials von der rotierenden Achse unterschiedlich ist. Die benötigte Abbauzeit liegt bei statischen Filtern je nach Substrat bei ca. 10 Tagen. Bei dynamischen Anaerobfiltern konnte diese Zeit um einige Tage verkürzt werden. Würde man die Rotationsgeschwindigkeit des Trägermaterials weiter erhöhen, so könnte zwar eine noch höhere Intensität des Kontaktes zwischen Bakterien und Substrat erreicht werden, doch würde gleichzeitig das Substrat im ganzen Fermenter gemischt werden, wodurch nicht vollständig abgebautes Substrat zu früh ausgetragen würde und die erforderliche Abbauzeit bzw. Aufenthaltszeit wieder erhöht werden müsste. Gleichzeitig würde sich bei hohen Rotationsgeschwindigkeiten der Bakterienfilm im Aussenbereich des Filters ablösen und ausgetragen werden.

Ohne das Problem der unterschiedlichen Relativgeschwindigkeit zwischen Substrat und Bakterien in Abhängigkeit des Abstandes der Trägermaterials von der rotierenden Achse erwähnt zu haben, wird in der FR-A-2 528 030 die Möglichkeit einer pulsierenden Bewegung des Trägermaterials beschrieben. Hierbei wird die Bewegung entweder rotativ oder translativ durchgeführt und die Bewegungsrichtung periodisch geändert. Der Fermenter wird entweder gesamthaft und/oder chargenweise und/oder gefüllt und das Substrat durch eine mechanische Pumpe ständig umgewälzt oder durch Aufbau eines hydraulischen Druckes in einem externen Druckzylinder durch Vorfermentation aufgebaut und danach stossweise in Teilchargen gefüllt bzw. entleert. Bei einer chargenweisen Füllung wird das Bakterienpotential nicht optimal ausgenützt, da der Abbauprozess überall im Fermenter zeitlich gleich abläuft und damit je nach Abbaugrad nur gewisse Teile der Bakterienpopulation auf dem Filter aktiv sind. Bei einer Umwälzung kommt es zu einer unerwünschten Durchmischung; der Aufbau von Bakterienbiozönosen, welche an das jeweilige Gärstadium angepasst sind, wird so verhindert.

Arbeitet man mit einem Druckzylinder, wie in der zweiten Variante des FR-A 2 528 030 vorgeschlagen, so findet bei jeder stossweisen Eintragung vom Substrat eine Durchmischung von Material unterschiedlichem Abbaugrades statt und unvollständig abgebautes Substrat wird ausgestossen. Es ist somit die Aufgabe der vorliegenden Erfindung unter Anwendung der pulsierenden Relativbewegung zwischen Substrat und Trägermaterial die Abbauzeit nochmals zu erniedrigen und die Abbauqualität zu verbessern.

Diese Aufgabe löst ein Verfahren mit den Merkmalen des Patentanspruches 1.

Infolge des Pfropfstrombetriebes ergibt sich eine optimale Abfolge der Bakterienbiozönosen, dass heisst eine langsame Veränderung von deren Zusammensetzung im Verlauf des Weges in Abhängigkeit von der jeweiligen Substratzusammensetzung. Dies führt zu einem sehr starken, in jedem Bereich des Fermenters optimierten Gärprozess. Die Überlagerung der pfropfstrom Bewegung und der pulsierenden Bewegung ergibt eine gleiche Aufenthaltszeit aller Teile des Substrates ohne Durchmischung und damit eine optimale Gasausbeute, während die pulsierende Bewegung eine Erhöhung der Relativbewegung erzeugt, wodurch die aktive Biomasse erhöht und damit das Fermentervolumen verkleinert werden kann, was zu Kosteneinsparungen führt.

Die Gestaltung des erfindergemässen Fermenters geht aus dem Anspruch 5 hervor.

Weitere Beispiele vorteilhafter Ausgestaltungsformen des erfindergemässen Anaerobfilters bzw. des Verfahrens gehen aus den abhängigen Patentansprüchen hervor.

In der Zeichnung sind einige Beispiele verschiedener Ausführungsmöglichkeiten schematisch dargestellt und in nachfolgender Beschreibung im Zusammenhang mit der Wirkungsweise des erfindergemässen Verfahrens erläutert.

Die schematischen Schnittzeichnungen zeigen:

Figur 1 und 2    je einen Anaerobfilter mit in der Strömungsrichtung des Substrates beweglichen Filterpaketen;

Figur 3 und 4    je einen Anaerobfilter mit in Strömungsrichtung bewegten Substrat bei fest angeordneten Filterpaketen;

Figur 5    einen Anaerobfilter mit lokal unterschiedlicher Strömungsgeschwindigkeit und -richtung des Substrats.

Figur 6    einen Anaerobfilter mit feststehenden Filterpaketen und unter Verwendung des entstehenden Biogases in pulsierende Strömungsbewegung versetzbarem Substrat;

Figur 7    einen Anaerobfilter mit vertikal pulsierend bewegbaren Filterpaketen.

Figur 8    einen Anaerobfilter mit durch Seilzug bewegtem Filtermaterial.

Obwohl in den Zeichnungen die schematisch dargestellten Fermenter immer in der horizontalen Einbaulage gezeigt sind, kann deren Einbaulage beliebig geändert werden, so dass beispielsweise die Durchströmungsrichtung nicht von links nach rechts, sondern von unten nach oben oder umgekehrt verläuft.

Das je nach Fall unterschiedlich ausgeformte, hier quaderförmig gezeichnete Fermentergehäuse 1 ist mit einer Isolierschicht 2 umgeben um möglichst isotherme Bedingungen zu schaffen ohne viel Fremdenergie zur Temperaturregulierung zu benötigen. Die hierzu üblichen in- oder externen Heizungselemente sind in der Zeichnung nicht dargestellt, genausowenig wie etwelche Messeinrichtungen oder ein Sedimentabzug. Das abzubauende Substrat gelangt durch die Einlassöffnung 3 in die Filterkammer des Fermenters. In der Kammer 4 strömt das Substrat, beispielsweise bei der Abwasserreinigung anfallender, aufbereiteter Schlamm oder industrielle Abwässer, mit einer Geschwindigkeit, die garantiert, dass beim Verlassen der Kammer 4 durch den Auslass 5 das Substrat mindestens annähernd vollständig anaerob abgebaut ist. Der anaerobe Abbau, der im wesentlichen ein Gärprozess ist, setzt Gase frei. Dieses Gasgemisch, welches vorwiegend Methan enthält strömt durch einen Gasabzug 6 ab zur Weiterverwertung. Das Substrat S, welches durch die Einlassöffnung 3 eingepresst wird, bewegt sich nun zwangsweise im so genannten Pfropfstrombetrieb durch die Filterkammer 4 zum Auslass 5.

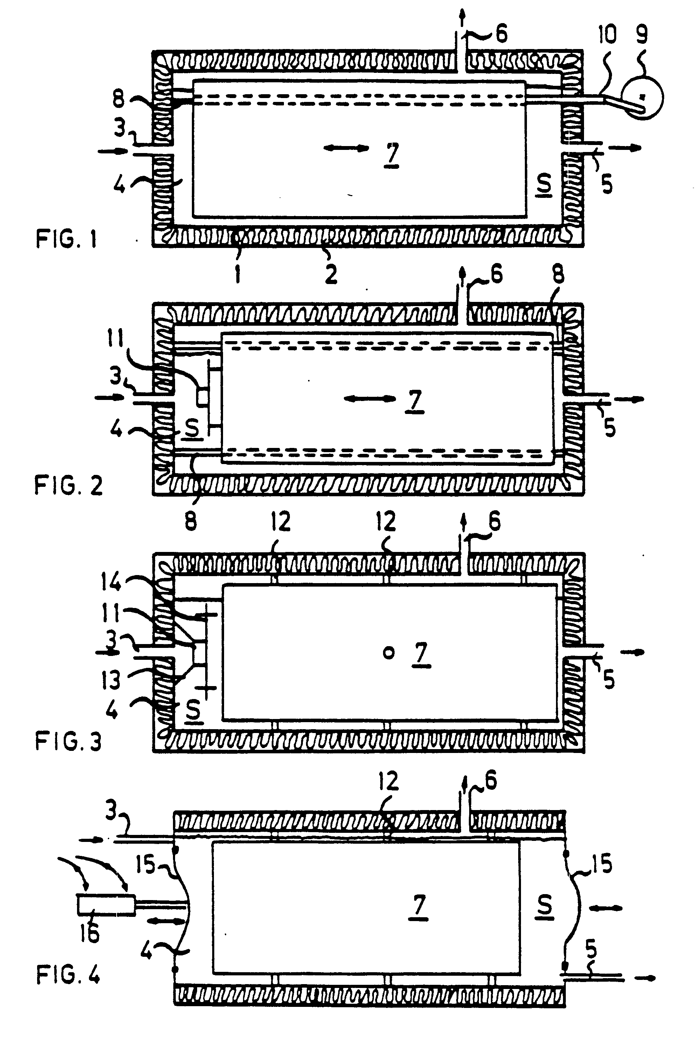

In den Ausführungen gemäss den Figuren 1 und 2 wird das in der Filterkammer 4 angeordnete Filterpaket 7 pulsierend bzw. oszillierend in der Strömungsrichtung des Substrates S hin und her bewegt. Hierzu ist das Filterpaket 7 beweglich gelagert 8 oder aufgehängt. In Figur 1 erfolgt die Bewegung des Filterpaketes 7 fluiddynamisch oder durch einen extern angebrachten, motorisch getriebenen Exzenter 9 über eine Schubstange 10. Damit lediglich eine erhöhte Durchströmung und somit ein intensiverer Kontakt von Substrat und Bakterien erfolgt ohne eine Vermischung des Substrates in seinen verschiedenen Abbauphasen, muss der Hubweg des Exzenters 9 und die Tourenzahl des Motors aufeinander und auf die optimalen biologischen Abbaubedingungen abgestimmt sein. Je grösser der Hubweg, desto geringer die Tourenzahl und somit die Anzahl pulsierender Bewegungen pro Zeiteinheit.

Im Gegensatz zum Typ nach Figur 1, der mit einer relativ grossen Amplitude und niederer Frequenz arbeitet, schwingt das Filterpaket 7 bei der Ausführung nach Figur 2 mit relativ hoher Frequenz, jedoch mit geringer Amplitude. Die Schwingung wird dem Filterpaket 7 hier durch einen Vibrator 11 aufgezwungen. Ansonsten sind die beiden Typen annähernd baugleich. Die Schwingung führt auch zu einem relativ gleichmässigen Durchsatz des Substrats durch die Filter des Filterpaketes.

Die Ausführungen nach Figur 3 und 4 stellen die kinematische Umkehrung der vorbeschriebenen beiden Typen dar. Gleiche Elemente sind unter Beibehaltung der Bezugszahlen gleich bezeichnet. In beiden Figuren sind die Filterpakete 7, die hier aus speziell geformten Platten oder Blöcken mit grosser Oberfläche und gutem Durchlass für das Substrat bestehen, stationär mit Stützen oder Träger 12 im Fermenter befestigt. In der Lösung nach Figur 3 wirkt der mit einer Halterung 13 am Fermentergehäuse 1 befestigte Vibrator 11 auf eine Schubplatte 14, die das Substrat S in eine pulsierende Bewegung versetzt.

Will man das Substrat S in einer langhubigen Bewegung mit niederer Frequenz bewegen, so kann dies so bewerkstelligen werden, dass man mindestens einen Teilbereich der Wand gummielastisch deformierbar macht und mindestens einen der als Membrane 15 wirkenden Wandbereiche pulsierend deformiert. Dies kann beispielsweise durch einen zweiseitig beaufschlagten Hydraulikzylinder 16 erfolgen. Wird die vordere Membran 15 eingedrückt, so wölbt sich die hintere Membran von selbst etwa um dieselbe Grössenordnung nach aussen und umgekehrt. Die Membran kann, aus einem mit einem Gewebe verstärkten, vulkanisierten Kautschuk hergestellt und mit einem Klemmring auf die entsprechende Stirnwand befestigt werden. Dies ergibt wiederum eine langhubige mit niederer Frequenz arbeitende pulsierende Bewegung.

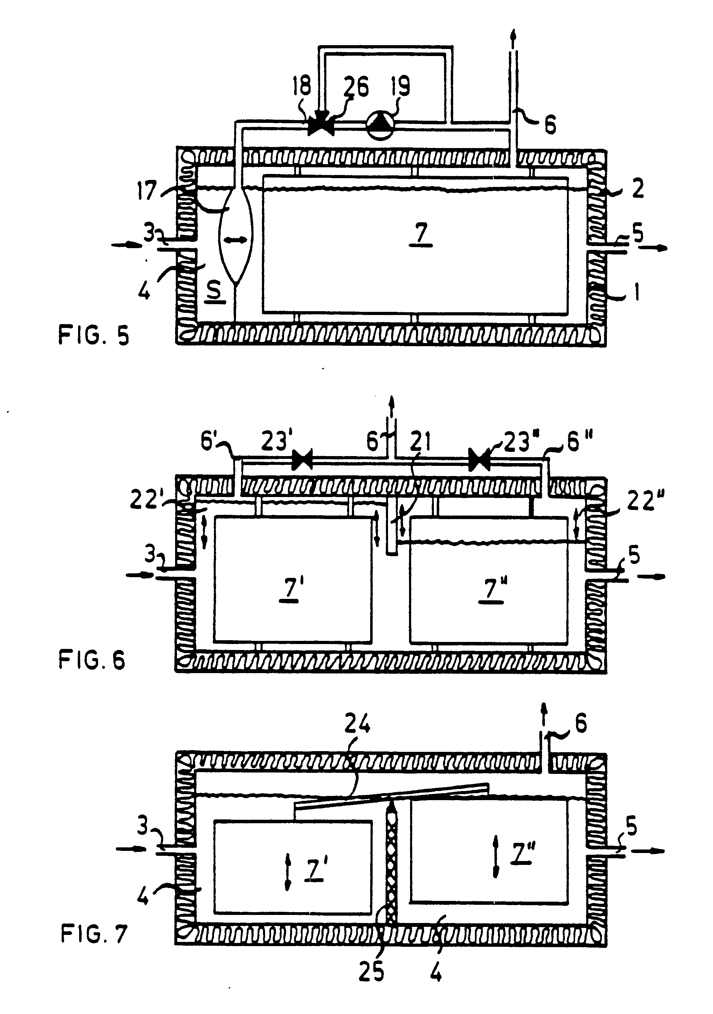

In Figur 5 wird durch rhytmisches Aufblasen und Entleeren eines Balgs, oder Kissens 17 eine pulsierende Bewegung des Substrats erzeugt, bei welcher die Relativgeschwindigkeiten zwischen Substrat und Filter nicht überall gleich gerichtet und gleich gross sind und bei welcher Hin- und Rückbewegung unterschiedlich schnell ablaufen können. Das Substrat wird im Bereich des Kissenbauchs stärker bewegt als an den Enden des entsprechend ausgeformten Kissens.

Durch das Dreiwegventil 26 und die Dimensionierung der Überbrückungsleitung des Gebläses 19 kann die Entleerungsgeschwindigkeit bestimmt werden, welche sich von der Füllgeschwindigkeit des Kissens unterscheidet. Unterschiedliche Hin- und Rückbewegungen sind auch mit anderen, bereits erwähnten Anordnungen erzielbar. Das Kissen kann auch mit Luft gefüllt werden. Das Aufblasen des Kissens führt sowohl zu horizontalen, wie durch Erhöhen der Substratoberfläche auch vertikalen und entsprechend überlagerten Bewegungen.

Haben die bisher besprochenen Ausführungen zur Erzeugung der Bewegung immer mit Fremdenergie gearbeitet, so ist in der Figur 6 eine Lösung gezeigt, die das anfallende Methangasgemisch zur Erzeugung der pulsierenden Bewegung nutzt.

Im Fermenter nach der Figur 6 ist etwa mittig eine senkrecht zur Strömungsrichtung verlaufende, relativ niedrige Trennwand 21 an der Fermenterdecke befestigt. Die Trennwand 21 unterteilt die Filterkammer im oberen Bereich in zwei Teilkammern 22' und 22''. Von jeder Teilkammer führt ein Gasabzug 6', 6'' zum gemeinsamen Gasabzug 6. In jeder Gasabzugleitung 6', 6'', ist ein Schliessventil 23', 23'' montiert. Entsprechend den Teilkammern 22', 22'' ist auch das Filtermaterial 7 in zwei Filterpakete oder -blöcke 7', 7'' unterteilt, die fix in den respektiven Teilkammerbereichen befestigt sind. Schliesst und öffnet man nun wechselweise die beiden Ventile 23', 23'' in den Gasabzugleitungen, so steigt und fällt das Niveau des Substrates in den beiden Teilkammern und bewirkt einen pulsierenden Betrieb mit vertikal verlaufender Schwingung. Die Ventile 23', 23'' lassen sich beispielsweise durch Schwimmerschalter, die in der Zeichnung nicht dargestellt sind, betätigen.

In der Figur 7 ist nochmals ein Anaerobfilter gezeigt, bei dem in der Filterkammer 4 zwei Filterpakete 7', 7'' an einer Wippe 24 befestigt sind. Die Wippe 24 kann mechanisch oder fluiddynamisch in Schaukelbewegung versetzt werden. Auch hier erfolgt die Relativbewegung des Substrates zu den Filterpaketen, auf denen die Bakterien haften, in vertikaler Richtung. Dabei sollte man jedoch nicht vergessen, dass im dargestellten Beispiel eine Zwangsdurchströmung durch die Filterkammer 4 im Pfropfstrombetrieb vom Einlass 3 zum Auslass 5 auch noch vorhanden ist, so dass insgesamt eine Überlagerung zweier translatorischer Bewegungen vorliegt. Die Stütze 25 der Wippe 24 stellt keine Unterteilung der Filterkammer dar.

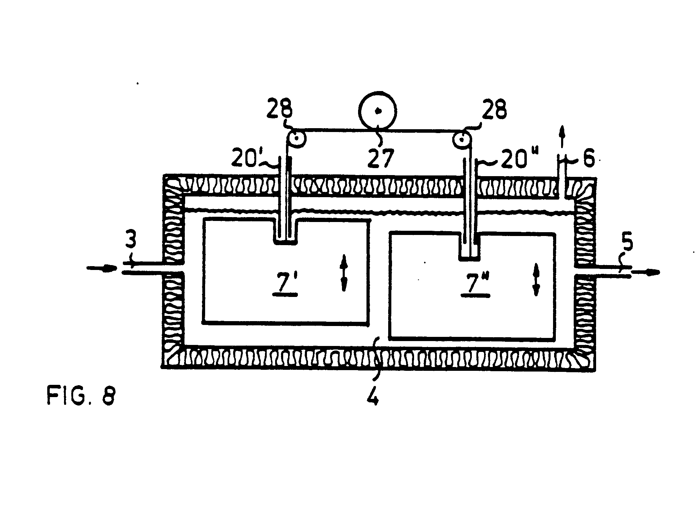

Letztlich ist in Figur 8 das rhytmische Bewegung der Filterpakete mittels Seil 27 oder Ketten dargestellt. Im gezeigten Beispiel ist der Antrieb des Seils ausserhalb des Fermentergehäuses angeordnet, indem das Seil über Rollen 28 umgelenkt wird und durch Tauchrohre 20', 20'' zu den Filterpaketen 7', 7'' geführt wird. Die Tauchrohre tauchen unter die Substratoberfläche des Substrats S, um so den Austritt von Gas aus dem Gasraum zu verhindern. Die Filterpakete sind am Seil aufgehängt. Die Bewegung von einem oder mehreren Filterpaketen in verschiedene Richtungen mittels eventuell über Rollen umgelenkter Seile ist auf verschiedenste Weise durchführbar.

**Patentansprüche**

1. Verfahren zur Reduktion der anaeroben Abbauzeit in einem dynamischen Anaerobfilter mit mindestens einem Filterpaket, in dem ein Trägermaterial mit daraufhaftender Bakterienbiomasse enthalten ist, wobei der Stoffaustausch vom Substrat zu den Bakterienzellen durch eine pulsierende Relativbewegung zwischen Substrat und der auf einem Trägermaterial festhaftenden Bakterienbiomasse erhöht wird, dadurch gekennzeichnet, dass die Relativbewegung zwischen Substrat und der Bakterienbiomasse auf dem Trägermaterial rhytmisch erfolgt, während gleichzeitig das Substrat pfropfstromartig vom Eingang des Filters zu dessen Ausgang bewegt wird, wobei eine Überlagerung der beiden Bewegungen erfolgt.

2. Verfahren nach Anspruch 1, dadurch gekennzeichnet, dass die pulsierende Bewegung senkrecht zur Durchströmungsrichtung erfolgt.

3. Verfahren nach den Ansprüchen 1 und 2, dadurch gekennzeichnet, dass die pulsierende Bewegung des Substrats beziehungsweise des Trägermaterials mittels Fremdenergie mechanisch und/oder fluiddynamisch erfolgt.

4. Verfahren nach einem der Ansprüche 1 bis 3, dadurch gekennzeichnet, dass die pulsierende Bewegung des Substrates beziehungsweise des Trägermaterials unter Ausnutzung des beim anaeroben Abbau freiwerdenden Biogases erfolgt.

5. Dynamischer Anaerobfilter zur Durchführung des Verfahrens nach Anspruch 1, bestehend aus einem normalerweise mit einer Thermoisolation (2) versehenen, beliebig ausgeformten Fermentergehäuse (1) mit mindestens einer darin angeordneten Filterkammer (4) mit einer Einlassöffnung (3) und einem Auslass (5), sowie mit einem Gasabzug (6), durch welchen das von den anaeroben Bakterien auf und in den Filterpaketen (7, 7', 7'') freigesetzte Gas aus der Kammer (4) entweichen kann, wobei in oder an der Filterkammer (4) Mittel (10, 11, 14, 15, 17, 21, 24, 27) zur Erzeugung einer pulsierenden Relativbewegung zwischen dem Substrat (S) und dem Trägermaterial (7, 7', 7'') vorgesehen sind, dadurch gekennzeichnet, dass in der Durchströmungsrichtung an entgegengesetzten Enden des Fermenters die Einlassöffnung (3) beziehungsweise der Auslass (5) vorgesehen sind zur gesteuerten pfropfstromförmigen Durchsetzung des Substrates durch den Fermenter.

6. Dynamischer Anaerobfilter nach Anspruch 5, dadurch gekennzeichnet, dass die Filterkammer (4) durch eine an der, in der Einbaulage, oberen Wand angebrachte vertikal verlaufende Teiltrennwand (21) in zwei Teilklammern unterteilt ist, in denen je ein Filterpaket (7', 7'') fixiert ist, und dass jede Teilkammer einen Gasabzug (6', 6'') aufweist, in denen Schliessventile (23', 23'') angeordnet sind, die im Wechselbetrieb geöffnet und geschlossen werden können, sodass das sich entwickelnde Gas abwechslungsweise das Niveau des flüssigen Substrates in der einen Teilkammer senkt und in der zweiten Teilkammer hochdrückt, sodass eine vertikal verlaufende pulsierende Bewegung des Substrates (S) erfolgt.

7. Pulsierender Anaerobfilter nach Anspruch 5, dadurch gekennzeichnet, dass die Filterpakete (7', 7'') durch ein Seil (27) bewegbar sind und dass das Seil durch ein unter die Substratoberfläche abtauchendes Tauchrohr (20', 20'') ausserhalb die Filterkammer (4) geführt wird und dort bewegbar ist.

8. Dynamischer Anaerobfilter nach Anspruch 5, dadurch gekennzeichnet, dass in der Filterkammer (4) eine Stütze (25) angeordnet ist, auf welcher eine Wippe (24) schwenkbar gelagert ist, und dass an jedem Ende der Wippe (24) ein Filterpaket (7', 7'') angehängt ist, wodurch beim Antrieb die Wippe die Filterpakete (7', 7'') in pulsierende Bewegung versetzt sind.

## Claims

1. A process to reduce the anaerobic decomposition time in a dynamic anaerobic filter with at least one filter pack containing a support material to which adheres bacterial biomass, where the material transfer from the substrate to the bacterial cells is increased by a pulsatory relative movement between the substrate and the bacterial biomass adhering to a support material, characterised in that the relative movement between the substrate and the bacterial biomass on the support material is rhythmic, while at the same time the substrate is moved in a plus flow mode from the filter intake to its outlet, with an overlapping of the two movements.

2. A process according to Claim 1, characterised in that the pulsatory movement takes place vertical to the direction of flow.

3. A process according to Claims 1 and 2, characterised in that the pulsatory movement of the substrate or the support material is achieved mechanically and/or fluid-dynamically by external energy.

4. A process according to Claims 1 to 3, characterised in that the pulsatory movement of the substrate or support material is achieved by exploiting the biogas released on anaerobic decomposition.

5. A dynamic anaerobic filter to perform the process according to Claim 1, comprising a fermenter housing (1) of any design and normally fitted with a thermal insulation (2), containing at least one filter chamber (4) with an intake opening (3) and an outlet (5) and a gas outlet (6), through which the gas released by the anaerobic bacteria on and in the filter packs (7, 7', 7'') can escape from the chamber (4), where in or on the chamber (4) are agents (10, 11, 14, 15, 17, 21, 24, 27) to generate a pulsatory relative movement between the substrate (S) and the support material (7, 7', 7''), characterised in that the intake opening (3) and/or outlet (5) in the direction flow at opposite ends of the fermenter are designed for a controlled plug flow mode of the substrate through the fermenter.

6. A dynamic anaerobic filter to claim 5, characterised in that the filter chamber (4) is divided by a vertical separating wall (21), fixed to the upper wall in the operating position, into two part chambers each containing a filter pack (7', 7''), and that each part chamber has a gas outlet (6', 6'') in each of which is fitted a closing valve (23', 23'') which can be opened and closed alternately so that the gas produced alternately lowers the level of the fluid substrate in one part chamber and raises it in the second, giving a vertical pulsatory movement of the substrate (S).

7. A pulsatory anaerobic filter to claim 5, characterised in that the filter pack (7', 7'') can be moved by a cable and that the cable is led through a submerged tube (20', 20'') beneath the surface of the substrate outside the filter chamber (4) and can be moved from there.

8. A dynamic anaerobic filter to claim 5, characterised in that in the filter chamber (4) is a support (25) on which a rocker (24) is mounted to oscillate, and that at each end of the rocker (24) is suspended a filter pack (7', 7''), where the filter packs (7', 7'') are given a pulsatory movement by the drive of the rocker.

## Revendications

1. Procédé pour réduire le temps de décomposition anaérobie dans un filtre anaérobie dynamique comprenant au moins un bloc de filtrage dans lequel est contenu un matériau de filtrage et une biomasse qui y adhère, le transfert de matière du substrat aux cellules bactériennes étant augmenté par un déplacement relatif pulsatoire entre le substrat et la biomasse bactérienne qui adhère au matériau support, caractérisé par le fait que le déplacement relatif entre le substrat et la biomasse bactérienne adhérant au matériau support a lieu de manière rythmique, cependant que le substrat est déplacé simultanément depuis l'entrée du filtre jusqu'à sa sortie avec une résistance à l'écoulement, et qu'à lieu une superposition de ces deux déplacements.

2. Procédé selon la revendication 1, caractérisé par le fait que le déplacement pulsatoire a lieu perpendiculairement à la direction de passage.

3. Procédé selon les revendications et caractérisé par le fait que le déplacement pulsatoire du substrat ou respectivement, du matériau support, a lieu de manière mécanique ou hydrodynamique au moyen d'une énergie extérieure.

4. Procédé selon l'une des revendications 1 à 3, caractérisé par le fait que le déplacement pulsatoire du substrat ou, respectivement, du matériau support, a lieu en utilisant le gaz biologique libéré lors de la décomposition anaérobie.

5. Filtre anaérobie dynamique pour la mise en oeuvre du procédé selon la revendication 1, composé d'un caisson de fermenteur (1) de conformation quelconque muni normalement d'une isolation thermique et comprenant au moins une chambre de filtrage (4) qui est disposée à l'intérieur du caisson et qui comprend un orifice d'admission (3) et une sortie (5), ainsi qu'un évent (6) à travers lequel le gaz libéré dans et sur les blocs de filtrage (7, 7', 7'') par les bactéries anaérobies peut s'échapper de la chambre (4), de moyens (10, 11, 14, 15, 17, 21, 24, 27) étant prévus dans ou sur la chambre de filtrage (4) pour engendrer un déplacement relatif pulsatoire entre le substrat (S) et le matériau (7, 7', 7'') caractérisé par le fait que l'orifice d'admission (3) et la sortie respectivement, sont prévus à des extrémités du fermenteur qui sont opposées entre elles, dans la direction de l'écoulement, en vue du passage contrôlé du substrat à travers le fermenteur avec une résistance à l'écoulement.

6. Filtre anaérobie dynamique selon la revendication 9, caractérisé par le fait que la chambre de filtrage (4) est divisée, par une cloison partielle (21) qui s'étend verticalement et qui est montée sur la paroi située en haut dans la position de montage, en deux chambres partielles dans chacune desquelles est fixé un bloc de filtrage (7, 7''), et par le lait que chaque chambre partielle comporte un évent (6', 6'') dans lequel est disposé un clapet de fermeture (23', 23''), ces clapets pouvant être fermés et ouverts alternativement, de telle sorte que le gaz qui se dégage abaisse alternativement le niveau du substrat liquide dans l'une des chambres partielles et l'élève dans l'autre chambre partielle, de sorte qu'il se produit un déplacement pulsatoire vertical du substrat (S).

7. Filtre anaérobie pulsatoire selon la revendication 9, caractérisé par le fait que les blocs de filtrage (7', 7'') peuvent être déplacé par un câble (27), et par le fait que le câble est amené à l'extérieur de la chambre de filtrage (4) a travers un tube plongeur (20' 20'') pénétrant au-dessous de la surface du substrat, et qu'il peut y être déplacé.

8. Filtre anaérobie dynamique selon la revendication 5, caractérisé par le fait qu'est disposé dans la chambre de filtrage (4) un support (25) sur lequel une bascule (24) est montée oscillante, et par le fait qu'un bloc de filtrage (7', 7'') est suspendu à chaque extrémité de la bascule (24), grâce à quoi les blocs de filtrage (7', 7'') sont soumis à un déplacement pulsatoire lorsque la bascule est entraînée.

FIG. 1

FIG. 2

FIG. 3

FIG. 4

FIG. 5

FIG. 6

FIG. 7

FIG. 8